(19) Europäisches Patentamt
European Patent Office
Office européen des brevets

(11) **EP 4 199 443 A1**

(12) **EUROPEAN PATENT APPLICATION**
published in accordance with Art. 153(4) EPC

(43) Date of publication:
**21.06.2023 Bulletin 2023/25**

(21) Application number: **21863423.6**

(22) Date of filing: **28.07.2021**

(51) International Patent Classification (IPC):
**H04L 27/01** $^{(2006.01)}$

(52) Cooperative Patent Classification (CPC):
**H04B 7/0413; H04L 25/03; H04L 27/01; H04L 27/38**

(86) International application number:
**PCT/CN2021/109039**

(87) International publication number:
**WO 2022/048355 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.09.2020 CN 202010909012**

(71) Applicant: **ZTE Corporation**
**Shenzhen, Guangdong 518057 (CN)**

(72) Inventor: **LIANG, Junpeng**
**Shenzhen, Guangdong 518057 (CN)**

(74) Representative: **Osterhoff, Utz**
**Bockermann Ksoll**
**Griepenstroh Osterhoff**
**Patentanwälte**
**Bergstraße 159**
**44791 Bochum (DE)**

(54) **FREQUENCY DOMAIN GENERALIZED LINEAR EQUILIBRIUM METHOD, APPARATUS AND SYSTEM, AND NON-VOLATILE STORAGE MEDIUM**

(57) The present application relates to the field of communications, and discloses a frequency-domain generalized linear equalization method, a device, a system and a non-transitory storage medium. The method includes receiving a to-be-processed signal and obtaining a complex value of the to-be-processed signal; obtaining a conjugate of the to-be-processed signal according to the complex value, taking the complex value and the conjugate as an input signal input to a generalized linear equalizer; the generalized linear equalizer calculating a frequency-domain error vector of the input signal; updating an initial frequency-domain compensation coefficient based on the frequency-domain error vector to obtain an equalized target frequency-domain compensation coefficient, which is suitable for equalization processing of the current to-be-processed signal, that is, the equalization processing in time-domain is transformed to the equalization processing in frequency-domain.

FIG. 1

Processed by Luminess, 75001 PARIS (FR)

**Description**

**CROSS-REFERENCE TO RELATED APPLICATIONS**

This application claims priority to Chinese Patent Application No. 202010909012.1, filed on September 02, 2020. The disclosures of the above applications are incorporated herein by reference in their entireties.

**TECHNICAL FIELD**

Embodiments of the present application relate to the field of communications, and in particular to a frequency-domain generalized linear equalization method, a device, a system and a non-transitory storage medium.

**BACKGROUND**

As the modulation order increases and the modulated baud rate increases, these residual front end impairments such as an amplitude imbalance, a phase imbalance and IQ skew will cause considerable performance cost. In order to solve this problem, the traditional 2×2butterfly structure of the multi-input and multi-output (MIMO) equalizer is usually used. However, the 2×2butterfly structure of MIMO can only achieve polarization demultiplexing and the skew compensation between polarizations, but cannot compensate for the impairment of the receiver. To address this problem, the following solutions are proposed.

Solution 1: The 4×4 structure of MIMO is used to separate the complex value of the X polarization state signal and the complex value of the Y polarization state signal in the I and Q, that is, the X polarization state signal and Y polarization state signal is split into four signals XI, XQ, YI and YQ, and then these four signals are taken as the input of the 4×4 structure of MIMO. In this solution, because the IQ restriction is removed and 16 real-valued equalizers are used in the middle, so that each signal can have a different response function, thus the imbalance and IQ skew effect at the receiver is compensated. However, this MIMO structure is not compact enough, and it is difficult to compensate for the IQ impairment at the receiver under the traditional dispersion compensation method in the case of long distance transmission.

Solution 2: A generalized linear equalizer of the compact structure is used, complex values of the two polarization state signals are used, and then their conjugates are derived, and the complex values and their conjugates as four inputs to a 2×2 generalized linear equalizer (the kernel of the generalized linear equalizer is actually 4×2, generally called generalized linear 2×2, because it has only two inputs and two outputs), thus the impairment of the receiver is compensated, and since its input conjugates can be partially obtained from the complex values of two input polarization state signals, it can retain two inputs. However, due to the IQ mixing effect, the current time-domain generalized linear equalizers have a very large complexity and require a large number of taps, which limits their potential in practice.

**SUMMARY**

Embodiments of the present application provide a applied to a frequency-domain generalized linear equalizer, includes: receiving a to-be-processed signal and obtaining a complex value of the to-be-processed signal; obtaining a conjugate of the to-be-processed signal according to the complex value, taking the complex value and the conjugate as an input signal; calculating a frequency-domain error vector of the input signal; updating an initial frequency-domain compensation coefficient based on the frequency-domain error vector to obtain an equalized target frequency-domain compensation coefficient; and compensating and/or recovering the to-be-processed signal based on the target frequency-domain compensation coefficient.

The present application also provides frequency-domain generalized linear equalization device, including: a receiving module for receiving a to-be-processed signal and obtaining a complex value of the to-be-processed signal; an input signal acquisition module for obtaining a conjugate of the to-be-processed signal according to the complex value, taking the complex value and the conjugate as an input signal; a calculation module for calculating a frequency-domain error vector of the input signal; an updating module for updating an initial frequency-domain compensation coefficient based on the frequency-domain error vector to obtain an equalized target frequency-domain compensation coefficient; and an equalization module for compensating and/or recovering the to-be-processed signal based on the target frequency-domain compensation coefficient.

The present application also provides a frequency-domain generalized linear equalization system, including the above frequency-domain generalized linear equalization device.

The present application also provides a non-transitory storage medium, storing computer readable programs, wherein the computer readable programs are for the computer to execute the frequency-domain generalized linear equalization method.

**BRIEF DESCRIPTION OF THE DRAWINGS**

One or more embodiments are illustrated exemplarily by the drawings, and these exemplary illustrations do not constitute a limitation on the embodiments.

FIG. 1 is a flowchart of a frequency-domain generalized linear equalization method according to a first embodiment of the present application.

FIG. 2 is a schematic diagram of a frequency-domain generalized linear equalizer to which the frequency-domain generalized linear equalization method is applied according to the first embodiment of the present application, as shown in FIG. 1.

FIG. 3 is a flowchart of the frequency-domain generalized linear equalization method according to a second embodiment of the present application.

FIG. 4 is a schematic diagram of dispersion compensation for the frequency-domain generalized linear equalizer to which the frequency-domain generalized linear equalization method is applied according to the second embodiment of the present application, as shown in FIG. 2.

FIG. 5 is a schematic structural diagram of the frequency-domain generalized linear equalization device according to a third embodiment of the present application.

FIG. 6 is a schematic structural diagram of the frequency-domain generalized linear equalizer according to a fifth embodiment of the present application.

**DETAILED DESCRIPTION OF THE EMBODIMENTS**

In order to make the purpose, technical solutions and advantages of the embodiments of the present application clearer, each embodiment of the present application will be described in detail below in conjunction with the drawings. However, it will be understood by those skilled in the art that in each embodiment of the present application, many technical details are presented to enable the reader to better understand the present application. However, even without various variations and modifications based on each of the following embodiments and these technical details, the technical solution protected by the present application can be realized. The following embodiments are divided for the convenience of description and should not constitute any limitation to the specific implementation of the present application, and each embodiment can be combined with each other without contradiction.

The front end of the coherent optical receiver often suffers from impairments such as amplitude imbalance, phase imbalance and IQ skew. Although the calibration in the factory can suppress and compensate for most of these impairments, there are usually still residual impairments, even well-calibrated devices may suffer from these impairments in practice due to temperature variations and device aging. In recently, in order to solve this problem, the traditional $2\times2$ butterfly structure of the multi-input and multi-output (MIMO) equalizer is usually used. However, the $2\times2$ butterfly structure of MIMO can only achieve polarization demultiplexing and skew compensation between polarizations, but cannot compensate for the impairment of the receiver. To address this problem, the following solutions are proposed.

Solution 1: The $4\times4$ structure of MIMO is used to separate the complex value of the X polarization state signal and the complex value of the Y polarization state signal in the I and Q, that is, the X polarization state signal and Y polarization state signal is split into four signals XI, XQ, YI and YQ, and then these four signals are taken as the input of the $4\times4$ structure of MIMO. In this solution, because the IQ restriction is removed and 16 real-valued equalizers are used in the middle, so that each signal can have a different response function, thus the imbalance and IQ skew effect at the receiver is compensated. However, this MIMO structure is not compact enough, and it is difficult to compensate for the IQ impairment at the receiver under the traditional dispersion compensation method in the case of long distance transmission.

Solution 2: A generalized linear equalizer of the compact structure is used, complex values of the two polarization state signals are used, and then their conjugates are derived, and the complex values and their conjugates as four inputs to a $2\times2$ generalized linear equalizer (the kernel of the generalized linear equalizer is actually $4\times2$, generally called generalized linear $2\times2$, because it has only two inputs and two outputs), thus the impairment of the receiver is compensated, and since its input conjugates can be partially obtained from the complex values of two input polarization state signals, it can retain two inputs. However, due to the IQ mixing effect, the current time-domain generalized linear equalizers have a very large complexity and require a large number of taps, which limits their potential in practice.

The purpose of the present application provides a frequency-domain generalized linear equalization method, a device, a system and a non-transitory storage medium, aiming to solving the above problem.

The first embodiment involves a frequency-domain generalized linear equalization method. The complex value of the to-be-processed signal is obtained when the signal is received, and the conjugate of the to-be-processed signal is obtained based on the complex value, and then the conjugate and the complex value as the input signal are input to the frequency-domain generalized linear equalizer. Since the frequency-domain generalized linear equalizer calculates the frequency-domain error vector of the input signal, and then updates the initial frequency-domain compensation coefficient according to the frequency-domain error vector to obtain the target frequency-domain compensation coefficient suitable for the equalization process of the current to-be-processed signal, that is, the equalization process in the time-domain is converted into the equalization process in the frequency-domain, to greatly reduce the complexity of the implementation, and the to-be-processed signal is compensated and/or recovered finally based on the equalized target frequency-domain compensation coefficient, to solve the imbalance between IQs and IQ skew problem.

The implementation details of the frequency-domain generalized linear equalization method of the embodiment are described below. The following are implementation details provided for ease of understanding only and are not necessary to implement the embodiment.

The frequency-domain generalized linear equalization method of the embodiment is specifically applied to a frequency-domain generalized linear equalizer, i.e., a generalized linear equalizer capable of compensating and/or recovering the to-be-processed signal based on the frequency-domain generalized linear equalization method achieved by the frequency-domain iterative method provided in the embodiment on the basis of the generalized linear equalizer.

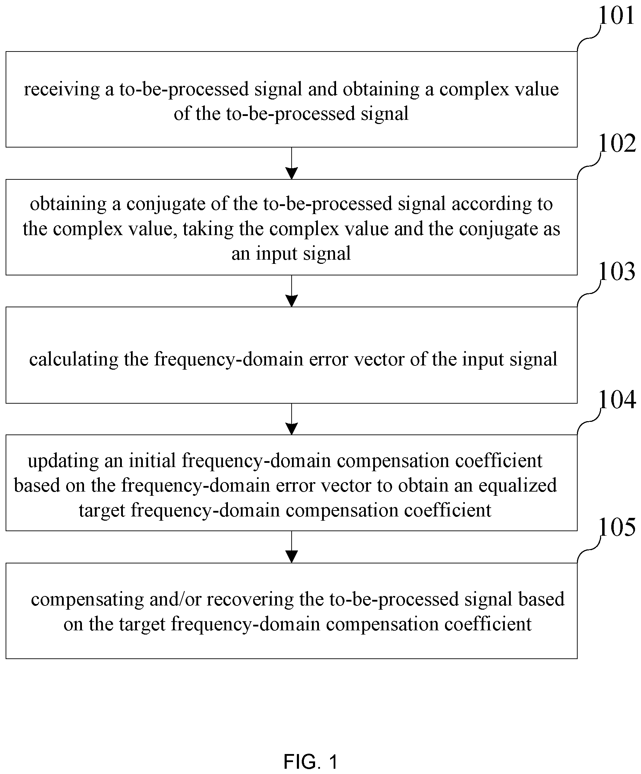

For ease of understanding, the frequency-domain generalized linear equalization method provided in the embodiment is described specifically in the following in conjunction with FIG. 1.

The specific process of the embodiment shown in FIG. 1 specifically includes:

operation 101, receiving a to-be-processed signal and obtaining a complex value of the to-be-processed signal.

Specifically, the above to-be-processed signal is a polarization state signal, and in practice, the signal used for subsequent processing can be X polarization state signal, or Y polarization state signal, or X polarization state signal and Y polarization state signal.

For the sake of illustration, the 2×2 generalized linear equalizer (hereinafter referred to as: MIMO) is chosen as the basis for achieving the frequency-domain generalized linear equalizer, so the above to-be-processed signal needs to be divided into four inputs to the MIMO.

Accordingly, in order to obtain these four inputs, the above received to-be-processed signal needs to include the X polarization state signal and the Y polarization state signal, and then the complex values of these two polarization state signals are obtained, i.e., the complex value of the X polarization state signal and the complex value of the Y polarization state signal, to obtain the two inputs to the kernel of the MIMO.

Operation 102, obtaining a conjugate of the to-be-processed signal according to the complex value, taking the complex value and the conjugate as an input signal.

That is, the conjugate of the X polarization state signal is obtained based on the complex value of the X polarization state signal, and the conjugate of the Y polarization state signal is obtained based on the complex value of Y polarization state signal.

Finally, the complex value of the X polarization state signal and the complex value of Y polarization state signal, and the conjugate of the X polarization state signal and the conjugate of the Y polarization state signal are used as the four signals to be input to MIMO, which are as the input signals. That is, the process described in the subsequent operations is based on the complex value of the X polarization state signal, the conjugate of the X polarization state signal, the complex value of the Y polarization state signal and the conjugate of the Y polarization state signal.

Operation 103, calculating the frequency-domain error vector of the input signal.

Specifically, since in practice, it is the digital signals after analog-to-digital conversion processing that is input into MIMO, and these digital signals carrying data are input into MIMO by inputting sample points, which are obtained by sampling the input signal. In order to facilitate the processing of MIMO, the processing is simplified, the processing rate is improved, and it is ensured that the target frequency-domain compensation coefficient can be more accurate compensation and/or recovery of the to-be-processed signal. Before the execution of operation 102, the embodiment divides the sample points according to a double sampling rate into an odd sample point and an even sample point, and takes a branch where the odd sample points are located as an odd branch and a branch where the even sample points are located as an even branch, i.e., the 1st, 3rd, 5th... sample points are divided as odd sample points, and the branch where these odd sample points are located is the odd branch; the 2nd, 4th, 6th...sample points are divided as even sample points, and the branch where these even sample points are located is an even branch; then, the odd sample points in the odd branch are divided with a preset length N into a number of odd sample data blocks, and the even sample points in the even branch are divided with the preset length N into a number of even sample data blocks.

The above preset length N, in practice, can be determined according to the number of sample points obtained by sampling the input signal, and N needs to be an integer greater than 0.

For example, when there are 1000 sample points, the preset length N can be 100, i.e., 100 sample points are taken as a data block.

For example, when there are 10,000 sample points or even more, the preset length N can be 1,000, i.e., 1,000 sample points are taken as a data block.

It should be understood that the above examples are only for the purpose of better understanding the technical solutions of the present embodiments and are not intended to be the sole limitation of the present embodiments.

In addition, it should be understood that since four signals are input to the MIMO, so the above sampling of the input signal, the division of odd sample points and even sample points, in the practice, each signal input to the MIMO need to be implemented in the manner described above.

Accordingly, after completing the above operation, a Fourier transform is performed on the odd sample point data blocks and the even sample point data blocks based on a Fourier transform algorithm, and then the frequency-domain error vector is determined based on transform results.

The operation that the frequency-domain error vector is determined based on the transform results obtained from the Fourier transform as described above specifically includes first determining the frequency-domain signal based on the transform result and the initial frequency-domain compensation coefficient, then processing the frequency-domain signal based on the inverse Fourier transform to obtain the output data vector for determining the time-domain error vector, then processing the output data vector based on the time-domain error function to obtain the time-domain error vector, and finally performing the Fourier transform on the time-domain error vector to obtain the frequency-domain error vector.

Through the above description, it is easy to find that, because the data blocks are divided into the odd sample point data blocks and the even sample point data blocks, so after the Fourier transform of these two types of data blocks, two transform results will be obtained, that is, the odd Fourier transform result and the even Fourier transform result. Therefore, in the embodiment, the initial frequency-domain compensation coefficient mentioned above need to include a first initial frequency-domain compensation coefficient of the odd branch and a second initial frequency-domain compensation coefficient of the even branch.

Accordingly, the above operation of performing the Fourier transform on the odd sample point data blocks and the even sample point data blocks, and determining the frequency-domain error vector based on the transform results includes: sequentially performing the Fourier transform on two adjacent odd sample point data blocks to obtain odd Fourier transform results; sequentially performing the Fourier transform on two adjacent even sample point data blocks to obtain the even Fourier transform result; adjusting the odd Fourier transform result based on the first initial frequency-domain compensation coefficient to obtain frequency-domain signal of the odd branch; adjusting the even Fourier transform result based on the second initial frequency-domain compensation coefficient to obtain an frequency-domain signal of the even branch; determining a frequency-domain signal of the input signal based on the frequency-domain signal of the odd branch and the frequency-domain signal of the even branch; performing an inverse Fourier transform on the frequency-domain signal of the input signal and selecting last N elements to obtain an output data vector; processing the output data vector based on a preset time-domain error function to obtain a time-domain error vector; and performing the Fourier transform on the time-domain error vector to obtain the frequency-domain error vector.

It should be understood that, since the Fourier transform performed on the odd sample point data blocks and the even sample point data blocks is performed on two adjacent data blocks, and the length of each data block is N. When the length of the data block on which the Fourier transform is performed is 2N, the number of elements selected after the inverse Fourier transform of the obtained frequency-domain signal is the number of one data block, i.e. N.

In addition, it is worth mentioning that since the time-domain error vector is determined based on the last N elements of the selected frequency-domain signal which is subjected to the inverse Fourier transform, in order to ensure that the final frequency-domain error vector transformed by the time-domain error vector can accurately and completely reflect the frequency-domain error vector of the above frequency-domain signal. Before the Fourier transform of the time-domain error vector, it is necessary to first complement M zeros at the front end of the time-domain error vector and then perform the Fourier transform on the time-domain error vector complemented by zeros to obtain the frequency-domain error vector, which can accurately and completely reflect the above frequency-domain signal.

The above M, in the specific implementation, is also an integer greater than 0, and the value of M+N should be equal to the total number of elements obtained by performing the inverse Fourier transform on the above frequency-domain signal, i.e. the values of M and N are related.

Through the above description, it is easy to find that since the length of the data block is N, and the determined frequency-domain signal is carried out on the basis of two adjacent data blocks, i.e., of length 2N. Therefore, when the time-domain error vector is obtained based on the output data vector of length N, in order to ensure that the value of M+N is equal to 2N, the number of zeros complementing the front end of the time-domain error vector in the embodiment is N, i.e., M in the embodiment is equal to N in the embodiment.

Operation 104, updating an initial frequency-domain compensation coefficient based on the frequency-domain error vector to obtain an equalized target frequency-domain compensation coefficient.

Specifically, the above operation 103 is divided into two operations as follows:

first, performing a gradient vector calculation on the frequency-domain error vector based on the odd Fourier transform result and the even Fourier transform result, and selecting first N elements to obtain a gradient vector; and,

second, based on the gradient vector, iterating the initial frequency-domain compensation coefficient until an iterative result converges to obtain the target frequency-domain compensation coefficient.

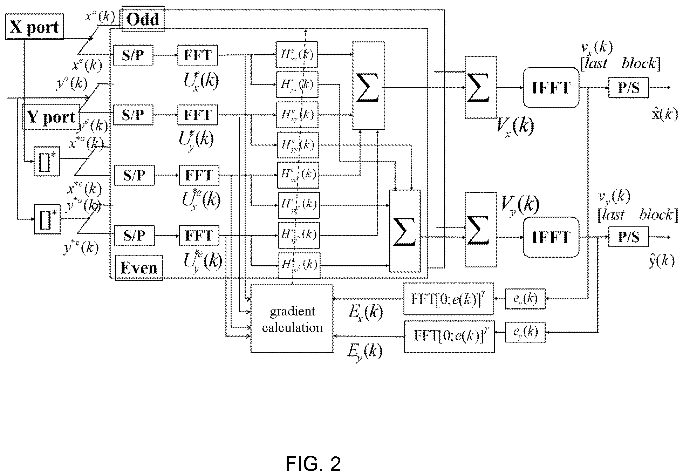

For ease of understanding, the above operations 101 to 103 are specified below in conjunction with FIG. 2.

In the first operation, the two polarization state signals sampled by the ADC of the analog-to-digital converter, such as the complex value $x(k)$ of the X polarization state signal input via the "X port" in FIG. 2, are used as one input, and the conjugate $x^*(k)$ of $x(k)$ is used as one input, and the complex value $y(k)$ of the Y polarization state signal input via the "Y port" is used as one input, and the complex value of the Y polarization state signal input via the "Y port" is used as one input, the conjugate $y^*(k)$ of $y(k)$ is used as one input, and the $x(k)$, $y(k)$ and $x^*(k)$, $y^*(k)$ are used as four inputs to the MIMO.

In the second operation, taking the double sampling rate as an example, dividing the sampled sample points into the odd branch and the even branch according to the odd and even sample points.

Specifically, the data associated with the odd sample points and the odd branch are indicated by a superscript $e$, and the data associated with the even sample points and the even branch are indicated by a superscript $e$.

As shown in FIG. 2, $x^e(k)$ indicates the complex value of the X polarization state signal located on the odd branch, $(k)$ indicates the conjugate of the X polarization state signal located on the odd branch, $y^o(k)$ indicates the complex value of the Y polarization state signal located on the odd branch, and $y^{*o}(k)$ indicates the conjugate of the Y polarization state signal located on the odd branch.

Accordingly, $x^o(k)$ indicates the complex value of the X polarization state signal located on the even branch, $x^{*o}(k)$ indicates the conjugate of the X polarization state signal located on the even branch, $y^o(k)$ indicates the complex value of the Y polarization state signal located on the even branch, and $y^{*o}(k)$ indicates the conjugate of the Y polarization state signal located on the even branch.

Accordingly, the layer where all odd branches (odd branch composed by $x^e(k)$, odd branch composed by $x^{*e}(k)$, odd branch composed by $y^e(k)$, odd branch composed by $y^{*e}(k)$) are located is an odd layer, that is called Even layer in FIG. 2; the layer where all even branches (even branch composed by $x^o(k)$, even branch composed by $x^{*o}(k)$, even branch composed by $y^o(k)$, even branch composed by $y^{*o}(k)$) are located is an even layer, that is called Odd layer in FIG. 2.

In the third operation, the odd sample points on each odd branch in the Even layer are processed with serial to parallel S/P with a preset length N, i.e., the adjacent odd sample points are divided by a preset length N into an odd sample data block. The even sample points on each even branch in the Odd layer are processed with serial to parallel S/P by the preset length N, i.e., the adjacent even sample points are divided by the preset length N into an even sample data block.

In the fourth operation, the Fourier transform (FFT) is performed for the same class of sample point data blocks (odd sample point data blocks or even sample point data blocks) to obtain $U_q^{e,o}(k)$ .

where the subscript $q \in \{x, y, x^*, y^*\}$.

It should be understood that since the data blocks are divided into odd sample point data blocks and even sample point data blocks, performing the FFT process includes:

in the Even layer, for the odd sample point data blocks on the odd branch composed by $x^e(k)$, the Fourier transform (FFT) is performed on two adjacent odd sample point data blocks to obtain $U_x^e(k)$ ; for the odd sample point data blocks on the odd branch composed by $x^{*e}(k)$, the FFT is performed on two adjacent odd sample point data blocks to obtain $U_x^{*e}(k)$ ; for the odd sample point data blocks on the odd branch composed by $y^e(k)$, the FFT is performed on two adjacent odd sample data blocks to obtain $U_y^e(k)$ ; for the odd sample point data blocks on the odd branch composed by $y^{*e}(k)$, the FFT is performed on two adjacent odd sample data blocks to obtain $U_y^{*e}(k)$ .

Accordingly, in Odd layer, for the even sample point data blocks on the even branch composed by $x^o(k)$, the FFT is performed on two adjacent even sample point data blocks to obtain $U_x^o(k)$ ; for the even sample point data blocks on the even branch composed by $x^{*o}(k)$, the FFT is performed on the two adjacent even sample point data blocks to obtain $U_x^{*o}(k)$ ; for the even sample point data blocks on the even branch composed by $y^o(k)$, the FFT is performed on the two adjacent even sample point data blocks to obtain $U_y^o(k)$ ; for the even sample point data blocks on the even branch composed by $y^{*o}(k)$, the FFT is performed on the two adjacent even sample point data blocks to obtain $U_y^{*o}(k)$ .

In the fifth operation, the frequency-domain signal of the input signal is determined based on the Equation (1).

$$V_p(k) = \sum_{p,q} H_{pq}^e(k) \otimes U_q^e(k) + \sum_{p,q} H_{pq}^o(k) \otimes U_q^o(k) \qquad (1)$$

where $V_p(k)$ denotes a frequency-domain signal, $\otimes$ denotes a dot product between elements, $H_{pq}^e(k)$ denotes the first initial frequency-domain compensation coefficient of the odd branch, and $H_{pq}^o(k)$ denotes the second initial frequency-domain compensation coefficient of the even branch.

It should be noted that, since the current generalized linear equalizer is implemented based on time-domain, the initial frequency-domain compensation coefficient, in the specific implementation, are obtained according to the following operations.

(a) First, the equalization coefficient whose length of the time-domain is N taps are selected.

Then, N zeros are complemented behind the $h(k)$, as follows:

$$[h(1), h(2), .. h(N), \underbrace{0, 0, .... 0}_{N}]$$

Finally, the Fourier transform is performed on the $h(k)$ complemented by N zeros, to obtain the initial frequency-domain compensation coefficient.

It should be understood that the above is for the whole, and for the corresponding odd and even branches, then the time-domain equalization coefficient are selected from the odd and even branches, respectively.

In addition, it is worth mentioning that, for the initialization of the time-domain equalization taps, any of the existing initialization methods, such as the central tap initialization method, or using the training series, can be selected as needed in the specific implementation, which is not limited herein.

In the sixth operation, the inverse Fourier transform is performed on the frequency-domain signal $V_p(k)$ obtained in the fifth operation, specifically, the frequency-domain signal $V_x(k)$ and $V_y(k)$, that is $IFFT\{V_p(k)\}$, and the last N elements in $IFFT\{V_p(k)\}$ are selected to obtain the output data vector $v_p(k) = \Downarrow IFFT\{V_p(k)\}$.

Where, $\Downarrow$ denotes the selection of the last N elements.

In the seventh operation, the data output vector $v_p(k)$, specifically $v_x(k)$ and $v_y(k)$, is processed based on the preset time-domain error function, to obtain the time-domain error vector.

Specifically, in this operation, the obtained data output vector $v_p(k)$ is used to calculate the time-domain error vector $e_p(k)$ based on different error calculation criteria, such as the $e_x(k)$ and $e_y(k)$ in FIG. 2. These different criteria can be a transverse mode algorithm (CMA) for nth-order phase shift keying (n-PSK) modulation formats, a multimode algorithm (CMMA) for higher-order modulation formats, a least squares (LMS) algorithm, etc.

For example, when polarization division multiplexing quadrature phase shift key (PDM-QPSK) modulation format is used, the time-domain error vector can be obtained based on Equation (2).

$$e_p(k) = [I_N - v_p(k) \otimes conj(v_p(k))] \otimes v_p(k) \qquad (2)$$

**It** should be understood that the above examples are only examples listed for better understanding of the technical solutions of the present embodiments and are not to be taken as the only limitation of the present embodiment. In practice, those skilled in the art may select a suitable calculation formula to calculate the time-domain error vector according to the selected modulation format.

In the eighth operation, the front end of the time-domain error vector $e_p(k)$ obtained in the seventh operation is complemented by N zeros, and then is performed by the Fourier transform to the frequency-domain error vector $E_p(k)$,

such as $E_x(k)$ and $E_y(k)$ in FIG. 2, that is $E_p(k) = FFT\{0_N; e_p(k)\}$.

In the ninth operation, the gradient vector is calculated based on Equation (3).

$$\nabla_{pq}^{e,o}(k) = \Uparrow IFFT\{E_p(k) \otimes conj\{U_q^{e,o}(k)\}\}^T \quad (3)$$

Where $\Uparrow$ indicates the selection of the first N elements.

In the tenth operation, the initial frequency-domain compensation coefficient are iterated based on Equation (4) to obtain the equalized target frequency-domain compensation coefficient.

$$H_{pq}^{e,o}(k+1) = H_{pq}^{e,o}(k) + \mu FFT[\nabla_{pq}^{e,o}(k); 0_N] \quad (4)$$

As a result, the existing time-domain-based generalized linear equalizer can be converted to a frequency-domain-based generalized linear equalizer according to one to ten operations above.

In addition, it is worth mentioning that the parameter $k$ in the first to tenth operations above specifically indicate the information of the $k$ th data block.

Operation 105, compensating and/or recovering the to-be-processed signal based on the target frequency-domain compensation coefficient.

Specifically, in the embodiment, the operation of the input signal based on the target frequency-domain compensation coefficient may be to compensate the input signal to a certain state, or to restore the input signal to the original state, or to compensate a part of the input signal to a certain state and to restore another part of the input signal to the original state.

Still shown in FIG. 2, then after the compensation and/or recovery process, two output signals $x(k)$ and $y(k)$ will be finally obtained.

Through the above description, it is easy to find that the frequency-domain generalized linear equalization method provided by the embodiment is mainly applied to the equalization part in the coherent receiver, and since it is implemented based on the generalized linear equalizer, it not only has the functions of polarization decoupling and polarization mode dispersion compensation in the traditional 2×2 equalizer, but also has other compensation capacity for the front end impairments at the coherent receiver, such as amplitude imbalance, phase imbalance, and IQ skew, etc.

In addition, the frequency-domain generalized linear equalization method provided in the embodiment includes: the conjugate is obtained based on the complex value of the to-be-processed signal, and the complex value and the conjugate as the input signal is input to the MIMO, and then the sampling points carrying data are converted from serial data to a number of parallel data blocks by serial to parallel, and then each two data blocks are transformed by the Fourier transform from the time-domain to the frequency-domain, and then, the initial frequency-domain compensation coefficient obtained based on the time-domain is updated by the obtained frequency-domain error vector to obtain the target frequency-domain compensation coefficient, which is suitable for the equalization process of the current to-be-processed signal, and the corresponding to-be-processed signal blocks are equalized in the frequency-domain, and then inverse transformed to the time-domain to obtain the final equalized data output. This solution adopts a generalized linear equalization structure, thus the IQ imbalance and IQ skew impairments at the receiver can be compensated, and the solution is also implemented iteratively in the frequency-domain, thus compared to the generalized time-domain equalizer, the complexity of implementation such as the computational complexity is greatly reduced, and the power consumption of the equalizer is reduced.

In addition, the frequency-domain generalized linear equalizer obtained by frequency-domain iteration based on the frequency-domain generalized linear equalization method provided in the embodiment can be applied not only at the receiver in optical communications to compensate for imbalances at the receiver, but also in coherent mediation in other channels such as wireless.

In addition, it is worth mentioning that for the existing solution that separates the I and Q of the complex value of the X polarization state signal and the complex value of the Y polarization state signal as the four inputs of the 4×4 equalizer, each input can have a different response function because this solution removes the limitation between IQs and uses 16 real-valued equalizers in the middle, so that the amplitude imbalance (the inequality degree of the real and imaginary parts of the complex value) at the receiver can be compensated, a phase imbalance (the real and imaginary parts of the complex value are not orthogonal, where there is a phase difference) and skew between polarization state signals (there is a time delay between the real and imaginary parts of the complex value). Although this approach can completely eliminate the impairment of the front end at the receiver in the case of back-to-back (B2B) transmission, if the conventional dispersion compensation method is used in the case of long distance transmission, it will suffer from the IQ mixing effect, which in turn will reduce the transmission performance, even to the extent that its transmission performance will be reduced to a level equal to that of MIMO with the conventional 2×2butterfly structure. In order to solve this problem, some people propose to use independent dispersion compensation structure to combine with 4×2 equalizer to solve the above technical problems. However, the above two solutions need to separate the I and Q, which cannot be processed for complex values. The generalized linear equalizer can directly use the complex values to directly compensate for the amplitude imbalance, phase imbalance and IQ skew impairment at the receiver, but it will still be affected by the IQ mixing effect if the traditional dispersion compensation method is used in the case of long distance transmission. Therefore, for the existing time-domain-based generalized linear equalizers, generally, the IQ mixing effect is solved by increasing the number of equalization taps, but the computational complexity of the generalized linear equalizer will be increased greatly, which makes it difficult to use the generalized linear equalizer in long-range transmission, and only increase of the number of equalization taps cannot completely compensate for the impairments caused by the IQ mixing.

In addition, since the input of the generalized linear equalizer is the complex values of the X polarization state signal and the Y polarization state signal and the conjugates obtained based on the complex values, i.e., there is no I signal and Q signal at all. For the traditional 4×2 MIMO equalizer, the dependent dispersion compensation to the I and Q signals cannot be adapted to the generalized linear equalizer. In order to solve this problem, the present application gives a second embodiment, which provides a dispersion compensation solution for the generalized linear equalizer, the solution does not need to separate the I and Q signals from the four input signals, but compensates the dispersion directly based on their own mediation. Therefore, it is not necessary to use a very long number of taps in the generalized linear equalizer, which greatly simplifies the complexity of the structure of the generalized linear equalizer, and the generalized linear equalizer can completely compensate for the impairment at the receiver to obtain the best compensation performance.

For the sake of illustration, the embodiment takes the frequency-domain generalized linear equalizer as an example and combines it with the above dispersion compensation method for the generalized linear equalizer for specific illustration.

The second embodiment involves a frequency-domain generalized linear equalization method. The second embodiment is further improved on the basis of the first embodiment, and the main improvement is that in order to solve the problem that the traditional dispersion compensation causes IQ mixing effect in the case of long distance transmission, which leads to the failure of compensation at the receiver, the dispersion compensation is required for the received input signal, and the input signal is adjusted according to the compensation result to update the input signal.

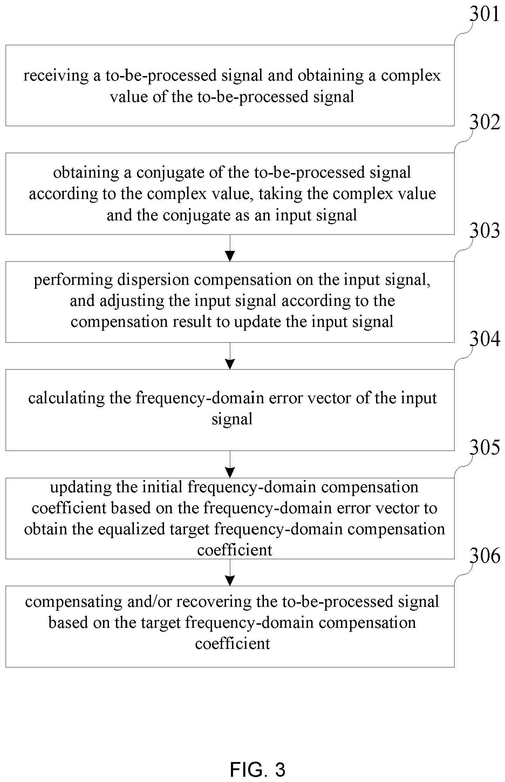

As shown in FIG. 3, the embodiment involves a frequency-domain generalized linear equalization method, including:

operation 301, receiving a to-be-processed signal and obtaining a complex value of the to-be-processed signal;

operation 302, obtaining a conjugate of the to-be-processed signal according to the complex value, taking the complex value and the conjugate as an input signal.

It is not difficult to find that operation 301 and operation 302 in the embodiment are substantially the same as operation 101 and operation 102 in the first embodiment, and will not be repeated here.

Operation 303, performing dispersion compensation on the input signal, and adjusting the input signal according to the compensation result to update the input signal.

Specifically, the dispersion compensation of the input signal in the embodiment is that after the compensation of the input signal, the input signal is adjusted again by the compensation result, thus solving the problem that the conventional dispersion compensation causes IQ mixing effect in the case of long distance transmission, resulting in the failure of compensation at the receiver.

In order to illustrate the above dispersion compensation process, the embodiment still takes the input signal including the complex value of the X polarization state signal, the conjugate of the X polarization state signal, the complex value of the Y polarization state signal and the conjugate of the Y polarization state signal as an example.

Specifically, for the four signals to be input to the MIMO, first, the dispersion compensation is performed on the complex value of the X polarization state signal, the conjugate of X polarization state signal, the complex value of the Y polarization state signal and the conjugate of the Y polarization state signal, respectively, to obtain the first dispersion compensation data of the complex value of the X polarization state signal, the second dispersion compensation data of the conjugate of the X polarization state signal, the third dispersion compensation data of the complex value of the Y polarization state signal, and the fourth dispersion compensation data of the conjugate of the Y polarization state signal; then the following operations are performed on each of the above four dispersion compensation data.

The adjustment of the complex value of the X polarization state signal specifically includes: adjusting the first dispersion compensation data based on the second dispersion compensation data, and taking the adjusted first dispersion compensation data as the complex value of the X polarization state signal.

The above adjustment operation in the embodiment includes: summing the first dispersion compensation data and the second dispersion compensation data, and averaging the summed value, and then taking an averaged result as the complex value of the X polarization state signal finally to be input to the MIMO.

The adjustment of the conjugate of the X polarization state signal specifically includes: adjusting the second dispersion compensation data based on the first dispersion compensation data, and taking the adjusted second dispersion compensation data as the conjugate of the X polarization state signal.

The above adjustment operation in the embodiment includes: summing the third dispersion compensation data and the fourth dispersion compensation data, and averaging the summed value, and then taking an averaged result as the conjugate of the X polarization state signal finally to be input to the MIMO.

The adjustment of the complex value of the Y polarization state signal specifically includes: adjusting the third dispersion compensation data based on the fourth dispersion compensation data, and then taking the adjusted third dispersion compensation data as the complex value of the Y polarization state signal.

The above adjustment operation in the embodiment specifically includes: summing the third dispersion compensation data and the fourth dispersion compensation data, and averaging the summed value, and then taking an averaged result as the complex value of the Y polarization state signal finally to be input to the MIMO.

The adjustment of the conjugate of the Y polarization state signal specifically includes: adjusting the fourth dispersion compensation data based on the third dispersion compensation data, and taking the adjusted fourth dispersion compensation data as the conjugate of the Y polarization state signal.

The above adjustment operation in the embodiment includes: making a difference value between the third dispersion compensation data and the fourth dispersion compensation data, and averaging the difference value, and then taking an averaged result as the conjugate of the Y polarization state signal finally to be input to the MIMO.

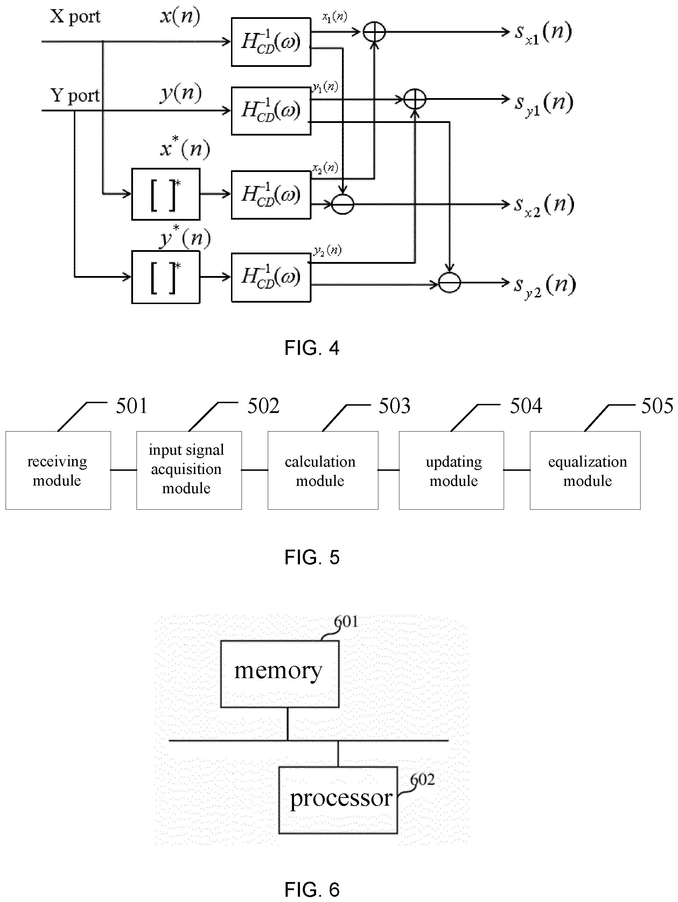

For ease of understanding, the above operation 303 is described in conjunction with FIG. 4 as follows.

In the first operation, the two input complex value data streams, i.e., the complex value $x(n)$ of the X polarization state signal input via the "X port" and the complex value $y(n)$ of the Y polarization state signal input via the "Y port", are taken as two inputs, and the conjugates of the two complex values are obtained, that is, the conjugate $x^*(n)$ of the X polarization state signal and conjugate $y^*(n)$ of the Y polarization state signal.

In the second operation, the dispersion compensation is performed on the four inputs.

Specifically, the dispersion compensation is performed on $x(n)$, $y(n)$, $x^*(n)$ and $y^*(n)$ by the frequency-domain response function $H_{CD}^{-1}(\omega)$ to obtain the first dispersion compensation data $x_1(n)$, the second dispersion compensation data $x_2(n)$, the third dispersion compensation data $y_1(n)$ and the fourth dispersion compensation data $y_2(n)$, respectively.

In the third operation, the four inputs obtained in the second operation, i.e., the first dispersion compensation data $x_1(n)$, the second dispersion compensation data $x_2(n)$, the third dispersion compensation data $y_1(n)$ and the fourth dispersion compensation data $y_2(n)$, are operated based on Equation (5) as follows.

$$\begin{cases} s_{x1}(n) = [x_1(n) + x_2(n)]/2 \\ s_{x2}(n) = [x_1(n) - x_2(n)]/2 \\ s_{y1}(n) = [y_1(n) + y_2(n)]/2 \\ s_{y2}(n) = [y_1(n) - y_2(n)]/2 \end{cases} \quad (5)$$

In the fourth operation, the four inputs $s_{x1}(n)$, $s_{y1}(n)$, $s_{x2}(n)$ and $s_{y2}(n)$ obtained in the third operation replace the four inputs $x(n)$, $y(n)$, $x^*(n)$ and $y^*(n)$ obtained in the case of back-to-back (B2B), respectively, to be the four inputs of MIMO, and then the operations from the operation 304 to the operation 306 are repeated as follows.

It is found experimentally that based on the dispersion compensation method given in the embodiment, the transmission performance is still better after 2000km of transmission, even if there are impairments at the receiver.

Operation 304, calculating the frequency-domain error vector of the input signal.

Specifically, as can be seen from the description of operation 303 above, when in long distance transmission, the input signal processed in operation 304 is compensated by the dispersion compensation method given in operation 303, i.e., the updated input signal.

Operation 305, updating the initial frequency-domain compensation coefficient based on the frequency-domain error vector to obtain the equalized target frequency-domain compensation coefficient.

Operation 306, compensating and/or recovering the to-be-processed signal based on the target frequency-domain compensation coefficient.

It is not difficult to find that operations 304 to 306 in the embodiment are substantially the same as operations 102 to 105 in the first embodiment, and will not be repeated here.

Thus, the frequency-domain generalized linear equalization method provided in the embodiment, based on the dispersion compensation method given above, can achieve a higher transmission performance by using fewer equalization taps, and reduce the complexity of the implementation and effectively solve the problem that the conventional dispersion compensation can cause IQ mixing effect, resulting in the failure of impairment compensation at the receiver in the case of long distance transmission.

In addition, it should be understood that the embodiment is only for the purpose of describing the frequency-domain generalized linear equalizer as an example in conjunction with the above dispersion compensation method.

In addition, the division of operations in the above methods is only for the sake of clarity of description, and the implementation can be combined into one operation or split into multiple operations by decomposing certain operations, as long as they include the same logical relationship, they are all within the scope of the present application; adding insignificant modifications to the algorithm or process or introducing insignificant designs, but not changing the core design of the algorithm and process are all within the scope of the present application.

The third embodiment of the present application involves a frequency-domain generalized linear equalization device, as shown in FIG. 5, including: a receiving module 501, an input signal acquisition module 502, a calculation module 503, an updating module 504, and an equalization module 505.

The receiving module 501 receives the to-be-processed signal and obtains the complex value of the to-be-processed signal; the input signal acquisition module 502 obtains the conjugate of the input to-be-processed signal based on the complex value, and takes the complex value and the conjugate as the input signal; the calculation module 503 calculates the frequency-domain error vector of the input signal; the updating module 504 updates the initial frequency-domain compensation coefficient based on the frequency-domain error vector to obtain an equalized target frequency-domain compensation coefficient; and an equalization module 505 for compensating and/or recovering the to-be-processed signal based on the target frequency-domain compensation coefficient.

Further, in another embodiment, the frequency-domain generalized linear equalization device further includes a data block division module.

Specifically, a data block division module for sampling the input signal to obtain sample points; dividing the sample points into odd sample points and even sample points according to a double sampling rate; taking a branch where the odd sample points are located as an odd branch and a branch where the even sample points are located as an even branch; dividing the odd sample points in the odd branch with a preset length N to obtain a number of odd sample point data blocks, N being an integer greater than 0; dividing the even sample points in the even branch with a preset length N into a number of even sample data blocks.

Accordingly, the calculation module 502 is specifically used to perform a Fourier transform on the odd sample point data block and the even sample point data block, respectively, and to determine the frequency-domain error vector based on the transform results.

Further, in another embodiment, the initial frequency-domain compensation coefficient includes a first initial frequency-domain compensation coefficient of the odd branch and a second initial frequency-domain compensation coefficient of the even branch.

Accordingly, the calculation module 502, when calculating the frequency-domain error vector, operates as follows:
sequentially performing the Fourier transform on two adjacent odd sample point data blocks to obtain an odd Fourier transform result; sequentially performing the Fourier transform on two adjacent even sample point data blocks to obtain an even Fourier transform result; adjusting the odd Fourier transform result based on the first initial frequency-domain compensation coefficient to obtain a frequency-domain signal of the odd branch; adjusting the even Fourier transform result based on the second initial frequency-domain compensation coefficient to obtain a frequency-domain signal of the even branch; determining a frequency-domain signal of the input signal based on the frequency-domain signal of the odd branch and the frequency-domain signal of the even branch; performing an inverse Fourier transform on the frequency-domain signal of the input signal and selecting last N elements to obtain an output data vector; processing the output data vector based on a preset time-domain error function to obtain a time-domain error vector; and performing the Fourier transform on the time-domain error vector to obtain the frequency-domain error vector.

Further, in another embodiment, the calculation module 502, before performing the Fourier transform on the time-domain error vector to obtain the frequency-domain error vector, also needs to complement M zeros at the front end of the time-domain error vector, M is an integer greater than 0 and M+N is equal to the total number of elements obtained by performing an inverse Fourier transform on the frequency-domain signal.

Accordingly, that the calculation module 502 performs the Fourier transform on the time-domain error vector to obtain the frequency-domain error vector includes: performing the Fourier transform on the time-domain error vector complemented by zeros to obtain the frequency-domain error vector.

In addition, in another embodiment, the frequency-domain generalized linear equalization device further includes a dispersion compensation module.

Specifically, a dispersion compensation module for performing the dispersion compensation on the input signal and adjusting the input signal according to the compensation result to update the input signal.

Further, in another embodiment, the input signal includes: a complex value of the X polarization state signal, a conjugate of the X polarization state signal, a complex value of the Y polarization state signal and a conjugate of the Y polarization state signal.

Accordingly, the dispersion compensation module, when performing dispersion compensation on the input signal and adjusting the input signal according to the compensation result to update the input signal, is based on the following process:

performing the dispersion compensation on the complex value of the X polarization state signal, the conjugate of the X polarization state signal, the complex value of the Y polarization state signal and the conjugate of the Y polarization state signal, to obtain first dispersion compensation data of the complex value of the X polarization state signal, second dispersion compensation data of the conjugate of the X polarization state signal, third dispersion compensation data of the complex value of the Y polarization state signal and fourth dispersion compensation data of the conjugate of the Y polarization state signal; adjusting the first dispersion compensation data based on the second dispersion compensation data, and taking the adjusted first dispersion compensation data as the complex value of the X polarization state signal; adjusting the second dispersion compensation data based on the first dispersion compensation data, and taking the adjusted second dispersion compensation data as the conjugate of the X polarization state signal; adjusting the third dispersion compensation data based on the fourth dispersion compensation data, and taking the adjusted third dispersion compensation data as the complex value of the Y polarization state signal; and adjusting the fourth dispersion compensation data based on the third dispersion compensation data, and taking the adjusted fourth dispersion compensation data as the conjugate of the Y polarization state signal.

Further, in another embodiment, the adjusting the first dispersion compensation data based on the second dispersion compensation data includes: summing the first dispersion compensation data and the second dispersion compensation data, and averaging the summed value.

Accordingly, the adjusting the second dispersion compensation data based on the first dispersion compensation data includes: making a difference value between the third dispersion compensation data and the fourth dispersion compensation data, and averaging the difference value.

Accordingly, the adjusting the third dispersion compensation data based on the fourth dispersion compensation data includes: summing the third dispersion compensation data and the fourth dispersion compensation data and averaging the summed value.

Accordingly, the adjusting the fourth dispersion compensation data based on the third dispersion compensation data includes: making a difference value between the third dispersion compensation data and the fourth dispersion compensation data, and averaging the difference value.

Furthermore, it is worth mentioning that, in practice, the frequency-domain generalized linear equalization device in the embodiment is specific to the actual physical device, that is, a frequency-domain generalized linear equalizer to which the frequency-domain generalized linear equalization method is adapted, i.e., the frequency-domain generalized linear equalizer is based on the relating generalized linear equalizer and can compensate additionally and alternatively recover the to-be-processed signal in the frequency-domain iterative manner provided in the embodiment based on the frequency-domain iteration method provided in the embodiment.

It is not difficult to find that the embodiment is a device embodiment of the first or second embodiment, and the embodiment can be implemented with the first or second embodiment in conjunction with each other. The relevant technical details mentioned in the first or second embodiment are still valid in the present embodiment and will not be repeated herein. Accordingly, the relevant technical details mentioned in the present embodiment can also be applied in the first or second embodiment.

It is worth mentioning that each module in the embodiment is a logical module, and in practice, a logical unit can be a physical unit, or a part of a physical unit, or can be realized by a combination of multiple physical units. In addition, in order to highlight the innovative part of the present application, the present embodiment does not introduce units that are less closely related to solving the technical problem proposed by the present application, but this does not indicate that other units do not exist in the present embodiment.

A fourth embodiment of the present application relates to a frequency-domain generalized linear equalization system, including the frequency-domain generalized linear equalization device in the third embodiment.

It should be understood that, in practice, the frequency-domain generalized linear equalization system described above is essentially a coherent optical communication system.

The description of the third embodiment shows that the frequency-domain generalized linear equalization device is essentially applied to the receiver of the coherent optical communication system, i.e., the above frequency-domain generalized linear equalizer.

Accordingly, the frequency-domain generalized linear equalization system needs to include the transmitter in addition to the receiver with the frequency-domain generalized linear equalization device.

Further, at the transmitter, it is necessary to include a transmitter laser, a transmitter data signal processing device, an IQ Machzed (MZ) modulator, and a polarization multiplexer.

Correspondingly, at the receiver, it is necessary to include a polarization demultiplexer, a local oscillation laser, a 90 degree mixer, a balanced detector, a transimpedance amplifier, an analog-to-digital converter, and a data signal processing device at the receiver.

It should be understood that the above examples are only for better understanding of the technical solutions of the present embodiments and are not intended to be the only limitation of the present embodiments.

A fifth embodiment of the present application relates to a frequency-domain generalized linear equalizer, as shown in FIG. 6, including at least one processor 602; and a memory 601 communicated to the at least one processor; wherein the memory 601 stores instructions executable by the at least one processor 602, the instructions are executed by the at least one processor 602 to enable the at least one processor 602 to perform the above frequency domain generalized linear equalization method.

The memory 601 and the processor 602 are connected using a bus, which may include any number of interconnected buses and bridges, and the bus connects one or more processors 602 and various circuits of the memory 601 together. The bus may also connect together various other circuits such as peripherals, voltage regulators, and power management circuits, which are well known in the art and therefore will not be further described herein. The bus interface provides the interface between the bus and the transceiver. The transceiver may be a single element or a plurality of elements, such as a plurality of receivers and transmitters, providing units for communicating with various other devices over a transmission medium. The data processed by the processor 602 is transmitted over the wireless medium via the antenna, and the antenna also receives the data and transmits it to the processor 602.

The processor 602 is responsible for managing the bus and the usual processing, and may also provide various functions including timing, peripheral interfaces, voltage regulation, power management, and other control functions. The memory 601 may be used to store data used by the processor 602 in performing operations.

A six embodiment of the present application relates to a non-transitory storage medium for storing a computer readable program. The computer readable program is used by a computer to perform the frequency-domain generalized linear equalization method in the embodiment described above.

That is, it is understood by those skilled in the art that all or some of the operations in the method of the above embodiments can be accomplished by instructing the associated hardware through a program stored in a storage medium, which includes a number of instructions to cause a device (which may be a microcontroller, chip, etc.) or processor to perform all or some of the operations of the method described in the various embodiments of the present application. The above storage media includes: a USB flash drive, a mobile hard disk, a readonly memory (ROM), a random access memory (RAM), a disk or CD-ROM, and other media that can store program code.

Those skilled in the art can understand that each of the above embodiments is a specific embodiment to realize the present application, and in practice, various changes can be made to it in form and details without deviating from the scope of the present application.

**Claims**

1. A frequency-domain generalized linear equalization method, applied to a frequency-domain generalized linear equalizer, **characterized by** comprising:

   receiving a to-be-processed signal and obtaining a complex value of the to-be-processed signal;
   obtaining a conjugate of the to-be-processed signal according to the complex value, taking the complex value and the conjugate as an input signal;
   calculating a frequency-domain error vector of the input signal;
   updating an initial frequency-domain compensation coefficient based on the frequency-domain error vector to obtain an equalized target frequency-domain compensation coefficient; and
   compensating and/or recovering the to-be-processed signal based on the target frequency-domain compensation coefficient.

2. The method according to claim 1, wherein before the calculating the frequency-domain error vector of the input signal, the method further comprises:

   sampling the input signal to obtain sample points;
   dividing the sample points according to a double sampling rate into odd sample points and even sample points;
   taking a branch where the odd sample points are located as an odd branch and a branch where the even sample points are located as an even branch;

dividing the odd sample points in the odd branch with a preset length N into a number of odd sample point data blocks, N being an integer greater than 0; and
dividing the even sample points in the even branch with a preset length N into a number of even sample data blocks;
wherein the calculating the frequency-domain error vector of the input signal comprises:
performing a Fourier transform on the odd sample point data blocks and the even sample point data blocks, and determining the frequency-domain error vector based on transform results.

3.  The method according to claim 2, wherein the initial frequency-domain compensation coefficient comprises a first initial frequency-domain compensation coefficient of the odd branch and a second initial frequency-domain compensation coefficient of the even branch;
the performing the Fourier transform on the odd sample point data blocks and the even sample point data blocks, and determining the frequency-domain error vector based on transform results comprises:

sequentially performing the Fourier transform on two adjacent odd sample point data blocks to obtain an odd Fourier transform result;
sequentially performing the Fourier transform on two adjacent even sample point data blocks to obtain an even Fourier transform result;
adjusting the odd Fourier transform result based on the first initial frequency-domain compensation coefficient to obtain a frequency-domain signal of the odd branch;
adjusting the even Fourier transform result based on the second initial frequency-domain compensation coefficient to obtain a frequency-domain signal of the even branch;
determining a frequency-domain signal of the input signal based on the frequency-domain signal of the odd branch and the frequency-domain signal of the even branch;
performing an inverse Fourier transform on the frequency-domain signal of the input signal and selecting last N elements to obtain an output data vector;
processing the output data vector based on a preset time-domain error function to obtain a time-domain error vector; and
performing the Fourier transform on the time-domain error vector to obtain the frequency-domain error vector.

4.  The method according to claim 3, wherein before the performing the Fourier transform on the time-domain error vector to obtain the frequency-domain error vector, the method further comprises:

complementing M zeros at a front end of the time-domain error vector, M being an integer greater than 0 and M+N being equal to a total number of elements obtained after the inverse Fourier transform of the frequency-domain signal of the input signal;
wherein the performing the Fourier transform on the time-domain error vector to obtain the frequency-domain error vector comprises:
performing the Fourier transform on the time-domain error vector complemented by zeros to obtain the frequency-domain error vector.

5.  The method according to claim 3, wherein the updating the initial frequency-domain compensation coefficient based on the frequency-domain error vector to obtain the equalized target frequency-domain compensation coefficient comprises:

performing a gradient vector calculation on the frequency-domain error vector based on the odd Fourier transform result and the even Fourier transform result, and selecting first N elements to obtain a gradient vector; and
based on the gradient vector, iterating the initial frequency-domain compensation coefficient until an iterative result converges to obtain the target frequency-domain compensation coefficient.

6.  The method according to any one of claims 1 to 5, wherein before the calculating the frequency-domain error vector of the input signal, the method further comprises:

performing a dispersion compensation on the input signal and adjusting the input signal according to a compensation result to update the input signal;
wherein the calculating the frequency-domain error vector of the input signal comprises:
calculating a frequency-domain error vector of the updated input signal.

**7.** The method according to claim 6, wherein the input signal comprises: a complex value of an X polarization state signal, a conjugate of the X polarization state signal, a complex value of a Y polarization state signal and a conjugate of the Y polarization state signal;

the performing the dispersion compensation on the input signal and adjusting the input signal according to the compensation result to update the input signal comprises:

performing the dispersion compensation on the complex value of the X polarization state signal, the conjugate of the X polarization state signal, the complex value of the Y polarization state signal and the conjugate of the Y polarization state signal, to obtain first dispersion compensation data of the complex value of the X polarization state signal, second dispersion compensation data of the conjugate of the X polarization state signal, third dispersion compensation data of the complex value of the Y polarization state signal and fourth dispersion compensation data of the conjugate of the Y polarization state signal;

adjusting the first dispersion compensation data based on the second dispersion compensation data, and taking the adjusted first dispersion compensation data as the complex value of the X polarization state signal;

adjusting the second dispersion compensation data based on the first dispersion compensation data, and taking the adjusted second dispersion compensation data as the conjugate of the X polarization state signal;

adjusting the third dispersion compensation data based on the fourth dispersion compensation data, and taking the adjusted third dispersion compensation data as the complex value of the Y polarization state signal; and

adjusting the fourth dispersion compensation data based on the third dispersion compensation data, and taking the adjusted fourth dispersion compensation data as the conjugate of the Y polarization state signal.

**8.** The method according to claim 7, wherein the adjusting the first dispersion compensation data based on the second dispersion compensation data comprises:

summing the first dispersion compensation data and the second dispersion compensation data, and averaging the summed value;

wherein the adjusting the second dispersion compensation data based on the first dispersion compensation data comprises:

obtaining a difference value between the first dispersion compensation data and the second dispersion compensation data, and averaging the difference value;

wherein the adjusting the third dispersion compensation data based on the fourth dispersion compensation data comprises:

summing the third dispersion compensation data and the fourth dispersion compensation data, and averaging the summed value;

wherein the adjusting the fourth dispersion compensation data based on the third dispersion compensation data comprises:

obtaining a difference value between the third dispersion compensation data and the fourth dispersion compensation data, and averaging the difference value.

**9.** A frequency-domain generalized linear equalization device, **characterized by** comprising:

a receiving module configured to receive a to-be-processed signal and obtaining a complex value of the to-be-processed signal;

an input signal acquisition module configured to obtain a conjugate of the to-be-processed signal according to the complex value, take the complex value and the conjugate as an input signal;

a calculation module configured to calculate a frequency-domain error vector of the input signal;

an updating module configured to update an initial frequency-domain compensation coefficient based on the frequency-domain error vector to obtain an equalized target frequency-domain compensation coefficient; and

an equalization module configured to compensate and/or recover the to-be-processed signal based on the target frequency-domain compensation coefficient.

**10.** A frequency-domain generalized linear equalization system, **characterized by** comprising the frequency-domain generalized linear equalization device according to claim 9.

**11.** A frequency-domain generalized linear equalizer, **characterized by** comprising:

at least one processor; and
a memory communicated with the at least one processor;
wherein the memory stores instructions executable by the at least one processor, when the instructions are executed by the at least one processor, the frequency-domain generalized linear equalization method according to any one of claims 1 to 8 is executed by the at least one processor.

12. A non-transitory storage medium, storing computer readable programs, **characterized in that**, the computer readable programs are for the computer to execute the frequency-domain generalized linear equalization method according to any one of claims 1 to 8.

101

receiving a to-be-processed signal and obtaining a complex value
of the to-be-processed signal

102

obtaining a conjugate of the to-be-processed signal according to
the complex value, taking the complex value and the conjugate as
an input signal

103

calculating the frequency-domain error vector of the input signal

104

updating an initial frequency-domain compensation coefficient
based on the frequency-domain error vector to obtain an equalized
target frequency-domain compensation coefficient

105

compensating and/or recovering the to-be-processed signal based
on the target frequency-domain compensation coefficient

FIG. 1

FIG. 2

301

receiving a to-be-processed signal and obtaining a complex
value of the to-be-processed signal

302

obtaining a conjugate of the to-be-processed signal
according to the complex value, taking the complex value
and the conjugate as an input signal

303

performing dispersion compensation on the input signal,
and adjusting the input signal according to the
compensation result to update the input signal

304

calculating the frequency-domain error vector of the input
signal

305

updating the initial frequency-domain compensation
coefficient based on the frequency-domain error vector to
obtain the equalized target frequency-domain compensation
coefficient

306

compensating and/or recovering the to-be-processed signal
based on the target frequency-domain compensation
coefficient

FIG. 3

X port   $x(n)$

$H_{CD}^{-1}(\omega)$   $x_1(n)$   $\oplus$   $\longrightarrow s_{x1}(n)$

Y port   $y(n)$

$H_{CD}^{-1}(\omega)$   $y_1(n)$   $\oplus$   $\longrightarrow s_{y1}(n)$

$x^*(n)$

$[\ ]^*$   $H_{CD}^{-1}(\omega)$   $x_2(n)$   $\ominus$   $\longrightarrow s_{x2}(n)$

$y^*(n)$

$[\ ]^*$   $H_{CD}^{-1}(\omega)$   $y_2(n)$   $\ominus$   $\longrightarrow s_{y2}(n)$

**FIG. 4**

| 501 | 502 | 503 | 504 | 505 |
|---|---|---|---|---|
| receiving module | input signal acquisition module | calculation module | updating module | equalization module |

**FIG. 5**

601

memory

602

processor

**FIG. 6**

## INTERNATIONAL SEARCH REPORT

International application No.

**PCT/CN2021/109039**

### A. CLASSIFICATION OF SUBJECT MATTER

H04L 27/01(2006.01)i

According to International Patent Classification (IPC) or to both national classification and IPC

### B. FIELDS SEARCHED

Minimum documentation searched (classification system followed by classification symbols)

H04L; H04B

Documentation searched other than minimum documentation to the extent that such documents are included in the fields searched

Electronic data base consulted during the international search (name of data base and, where practicable, search terms used)

CNKI, CNPAT, WPI, EPODOC, IEEE: 相干, 光, 通信, 偏振, 复数, 共轭, 正交, 信号, 广义, 线性, 均衡器, 失衡, 色散, 频域, 系数, 更新, coherent, fiber, communicaiton, polarization, complex, conjugate, quadrature, signal, widely, linear, equaliz+, IQ, imbalance, skew, dispersion, frequency, domain, coefficient, update

### C. DOCUMENTS CONSIDERED TO BE RELEVANT

| Category* | Citation of document, with indication, where appropriate, of the relevant passages | Relevant to claim No. |
|---|---|---|
| A | 张婷 等 (ZHANG, Ting et al.). "基于Hammerstein模型的非线性信道广义线性盲均衡算法 (Widely Linear Blind Equalization Algorithms for Nonlinear Channels Based on the Hammerstein Model)" 电子学报 (Acta Electronica Sinica), Vol. 43, No. 9, 30 September 2015 (2015-09-30), section 3.1 | 1-12 |
| A | CN 111082870 A (WUHAN RESEARCH INSTITUTE OF POSTS & TELECOMMUNICATIONS CO., LTD.) 28 April 2020 (2020-04-28) entire document | 1-12 |
| A | CN 108768912 A (HARBIN ENGINEERING UNIVERSITY) 06 November 2018 (2018-11-06) entire document | 1-12 |
| A | WO 2017220153 A1 (HUAWEI TECHNOLOGY CO., LTD.) 28 December 2017 (2017-12-28) entire document | 1-12 |
| A | US 2010209115 A1 (MENARA NETWORKS, INC.) 19 August 2010 (2010-08-19) entire document | 1-12 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 September 2021** | **01 November 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/109039**

| Patent document cited in search report | | | Publication date (day/month/year) | Patent family member(s) | | | Publication date (day/month/year) |
|---|---|---|---|---|---|---|---|
| CN | 111082870 | A | 28 April 2020 | None | | | |
| CN | 108768912 | A | 06 November 2018 | None | | | |
| WO | 2017220153 | A1 | 28 December 2017 | US | 2019123834 | A1 | 25 April 2019 |
| | | | | EP | 3465949 | A1 | 10 April 2019 |
| | | | | CN | 108886407 | A | 23 November 2018 |
| US | 2010209115 | A1 | 19 August 2010 | US | 2009028576 | A1 | 29 January 2009 |

Form PCT/ISA/210 (patent family annex) (January 2015)

**EP 4 199 443 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010909012